# EUROPÄISCHE PATENTANMELDUNG

(11) **EP 4 420 796 A1**
(43) Veröffentlichungstag der Anmeldung: **28.08.2024**
(21) Anmeldenummer: 24155455.9
(22) Anmeldetag: 02.02.2024
(51) Int. Cl.: B05C 5/02, B05C 11/10, F16K 31/06

(54) **VERFAHREN UND VORRICHTUNG ZUM AUFTRAGEN VON KLEBSTOFFPORTIONEN**

(30) Priorität: 09.02.2023 DE 102023103184
(71) Anmelder: Focke & Co. (GmbH & Co. KG), 27283 Verden (DE)
(72) Erfinder: Wiehe, Martin, 21614 Buxtehude (DE); Erfurt, Alex, 21075 Hamburg (DE); Knupper, Rene, 25421 Pinneberg (DE); Harms, Stefan, 22459 Hamburg (DE)
(74) Vertreter: Aulich, Martin

(57) **Zusammenfassung**

Die Erfindung betrifft ein Verfahren zum Auftragen von einzelnen Klebstoffportionen auf ein Substrat, bei dem die Klebstoffportionen mit einem Ventil (13) nacheinander auf das Substrat aufgebracht werden, wobei eine Spule (18) eines Elektromagneten für jede der aufeinanderfolgenden Abgaben von Klebstoffportionen des Ventils (13) jeweils mit einem Ansteuerspannungsimpuls (20) beaufschlagt wird, der eine Ventilöffnung des Ventils (13) für eine Ist-Öffnungsdauer bewirkt, während der aus dem Ventil (13) zur Abgabe der jeweiligen Klebstoffportion Klebstoff fließen kann, insbesondere durch Bewegung eines Verschlussorgans (17) des Ventils (13) aus einer Schließstellung in eine Öffnungsstellung. Die Erfindung ist dadurch gekennzeichnet, dass die Ist-Öffnungsdauer mindestens einer der Ventilöffnungen, die einer zeitlich vorherhergehenden Ventilöffnung nachfolgt, zur Kompensation von insbesondere elektromagnetischen, die Ist-Öffnungsdauer der nachfolgenden Ventilöffnung verlängernden Störeffekten nach Maßgabe eines oder mehrerer Ventilbetriebsparameter vorzugsweise dynamisch verkürzt wird im Vergleich zu einer Ist-Öffnungsdauer der nachfolgenden Ventilöffnung ohne eine solche Kompensation, und zwar durch Beaufschlagen der Spule (18) mit einem die verkürzte Ist-Öffnungsdauer bewirkenden Ansteuerspannungsimpuls (20).

## Beschreibung

Die vorliegende Erfindung betrifft ein Verfahren und eine Vorrichtung zum Auftragen von einzelnen Klebstoffportionen auf ein Substrat, bei dem die Klebstoffportionen mit einem Ventil nacheinander (und einzeln) auf das Substrat aufgebracht werden, wobei eine Spule eines Elektromagneten für jede der aufeinanderfolgenden Abgaben von Klebstoffportionen des Ventils jeweils mit einem Ansteuerspannungsimpuls beaufschlagt wird, der eine Ventilöffnung des Ventils für eine Ist-Öffnungsdauer bewirkt, während der aus dem Ventil zur Abgabe der jeweiligen Klebstoffportion Klebstoff fließen kann, insbesondere durch Bewegung eines Verschlussorgans des Ventils aus einer Schließstellung in eine Öffnungsstellung.

Während des Herstellungsprozesses von Zigarettenpackungen ist es notwendig, diverse Flächen des Packungszuschnittes mit Klebstoff zu versehen, um diese Flächen anschließend miteinander verkleben zu können. Hierfür kommen schnellschaltende elektromagnetisch geschaltete Ventile zum Einsatz, die für diverse Klebeaufträge eingesetzt werden, bei denen die Ventile beispielsweise mehrere punktförmige Klebstoffportionen kurz hintereinander abgeben. Diese Ventile sind unterschiedlichen Störeffekten ausgesetzt, sodass auch bei identischen Ansteuerspannungsimpulsen die Ist-Menge der jeweils abgegebenen Klebstoffportionen von der Soll-Menge im Laufe des Betriebs abweicht. Insbesondere durch Ummagnetisierungseffekte in dem Elektromagneten sowie durch Eigenerwärmung der Spule des Ventils und der damit verbundenen Verringerung der Klebstoffviskosität kann es im Betrieb zur Vergrößerung der Klebestoffportionsmengen kommen bzw. entsprechend zu unterschiedlich großen Klebstoffpunkten. Die Ummangnetisierungseffekte führen dazu, dass beispielsweise ein von dem Elektromagnet bewegtes Verschlussorgan des Ventils unter Verlängerung der Ist-Öffnungszeit bereits früher öffnet, als dies ohne Ummagnetisierungseffekte der Fall wäre. In gleicher Weise führt eine aufgrund der Erwärmung des Klebstoffs im Betrieb des Ventils kleiner werdende Viskosität des Klebstoffs dazu, dass das bewegte Verschlussorgan mit fortdauerndem Betrieb schneller durch den Klebstoff in die Öffnungsstellung bewegt werden kann als zu Anfang des Betriebs bei größerer Viskosität, was im Ergebnis ebenfalls eine Verlängerung der Ist-Öffnungszeit der jeweiligen Ventilöffnung nach sich zieht.

Um den vorgenannten viskositätsbedingten Änderungen der Ist-Öffnungszeiten und somit der Größen- bzw. Mengenänderung der Klebstoffportionen entgegenzuwirken, ist es im Stand der Technik unter anderem bekannt, die Viskosität des Klebstoffs beeinflussende Klebstofftemperatur zu erfassen und abhängig davon die Öffnungszeiten des Ventils einzustellen. Dabei werden die Öffnungszeiten jeweils abhängig von hinterlegten Kurven gesteuert, die den Zusammenhang zwischen Temperatur und Viskosität repräsentieren. Bei nacheinander aufgebrachten Klebstoffportionen einer Gruppe von Klebstoffportionen werden in diesem Zusammenhang, um identische Portionsmengen zu erhalten, sämtliche Portionsmengen an der gewünschten (aufgrund geringer werdender Viskosität ohne eine solche Steuerung größten) Menge der letzten Klebstoffportion der Gruppe ausgerichtet. Hierfür müssen in der Regel bestimmte Prognosen über die zum Zeitpunkt des Aufbringens der letzten Klebstoffportion der Gruppe vorherrschende Viskosität des Klebstoffs getroffen werden. Ausgehend davon werden dann die einzelnen Portionsmengen der vorhergehenden Klebstoffportionen auf die Größe bzw. Menge dieser letzten gewünschten Portion angepasst.

Dieses Vorgehen hat diverse Nachteile. Beispielsweise kann es aufgrund unvorhergesehener externer Störeffekte zu falschen Prognosen über die Viskosität des Klebstoffs zum Zeitpunkt der letzten Portion der Gruppe kommen, was wiederum zu unterschiedlichen Portionsmengen in der Gruppe und/oder von Soll-Mengen abweichenden Ist-Portionsmengen führen würde. Zudem ist ein Kosten auslösender Temperatursensor erforderlich, der aufwendig in das Ventil eingebaut und verdrahtet werden muss. Weiter ist das Verfahren aufgrund der begrenzten Auflösung und Abtastgeschwindigkeit des Sensors träge. Schließlich kann mit einem solchen Vorgehen den oben beschriebenen Ummagnetisierungseffekten nicht begegnet werden.

Ausgehend hiervon ist es Aufgabe der vorliegenden Erfindung, das eingangs genannte Verfahren und die eingangs genannte Vorrichtung weiterzuentwickeln.

Diese Aufgabe wird gelöst durch ein Verfahren mit den Merkmalen des Anspruchs 1 und eine Vorrichtung mit den Merkmalen des Anspruchs 14.

Das erfindungsgemäße Verfahren ist demnach dadurch gekennzeichnet, dass die Ist-Öffnungsdauer mindestens einer der Ventilöffnungen, die einer zeitlich vorhergehenden Ventilöffnung nachfolgt, zur Kompensation von insbesondere elektromagnetischen, die Ist-Öffnungsdauer der nachfolgenden Ventilöffnung verlängernden Störeffekten nach Maßgabe eines oder mehrerer Ventilbetriebsparameter vorzugsweise dynamisch verkürzt wird im Vergleich zu einer Ist-Öffnungsdauer der nachfolgenden Ventilöffnung ohne eine solche Kompensation, und zwar durch Beaufschlagen der Spule mit einem die verkürzte Ist-Öffnungsdauer bewirkenden Ansteuerspannungsimpuls.

Indem eine solche Verkürzung der Ist-Öffnungsdauer nach Maßgabe von den Ventilzustand beschreibenden Ventilbetriebsparametern erfolgt, wie etwa unter anderem der mittleren Frequenz der Ventilöffnungen und/oder der Zeitdifferenz zwischen zwei (unmittelbar) aufeinanderfolgenden Ventilöffnungen und/oder der an der Spule anliegenden Spannung und/oder des in der Spule fließenden Stroms, könnte auf Sensoren zur Erfassung der Viskosität des Klebstoffs verzichtet werden und insbesondere auch Ummagnetisierungseffekten entgegengewirkt bzw. diese kompensiert werden. So kann die Stärke der genannten Störeffekte aus einem oder mehreren dieser Ventilparameter abgeleitet werden und dann entsprechend die Ist-Öffnungszeit im Vergleich zu der Ist-Öffnungszeit ohne Kompensation verringert werden. Beispielsweise kann anhand der erfassten, in der Spule induzierten Spannung bewertet oder ermittelt werden, ob das Ventil, insbesondere der Elektromagnet, eine Restmagnetisierung aufweist, die ohne Kompensation zu einer Verlängerung der Ist-Öffnungszeit führen würde und ggf. zudem, in welcher Stärke diese vorliegt. Nach Maßgabe beispielsweise in der Steuerung hinterlegter Kurven, die einen Zusammenhang zwischen Restmagnetisierung und Ist-Öffnungszeit abbilden, könnte dann die Ist-Öffnungszeit entsprechend gewählt werden.

Vorzugsweise kann der, jeder oder mindestens einer der Ventilbetriebsparameter ein aktuell ermittelter Ventilbetriebsparameter sein, der während des Auftragsnormalbetriebs des Ventils insbesondere kontinuierlich oder zu mehreren diskreten Zeitpunkten durch Messung und/oder rechnerisch ermittelt wird, wobei abhängig von dem Ermittlungsergebnis die Ist-Öffnungszeit insbesondere dynamisch unterschiedlich stark verkürzt wird.

Weiter vorzugsweise kann der, jeder oder mindestens einer der Ventilbetriebsparameter ein vorab ermittelter Ventilbetriebsparameter sein, der vor dem Auftragsnormalbetrieb des Ventils durch Messung und/oder rechnerisch ermittelt und insbesondere in einem elektronischen Speicher hinterlegt wird, insbesondere unter Zuordnung zu einem anderen vorab ermittelten Ventilbetriebsparameter, insbesondere der Betriebszeit. Dabei kann im Auftragsnormalbetrieb auf diesen vorab ermittelten Betriebsparameter und/oder auf den zugeordneten Ventilbetriebsparameter zurückgegriffen werden, vorzugsweise derart, dass die Verkürzung der Ist-Öffnungsdauer während des Auftragsnormalbetriebs des Ventils nach Maßgabe dieses vorab ermittelten Ventilbetriebsparameters oder nach Maßgabe des zugeordneten anderen Betriebsparameters erfolgt.

Weiter vorzugsweise kann die Ist-Öffnungsdauer der nachfolgenden Ventilöffnung verkürzt werden auf die Ist-Öffnungsdauer der vorhergehenden Ventilöffnung, insbesondere zur Erzeugung gleicher Klebstoffportionsmengen bei den Klebstoffportionsabgaben der vorhergehenden und der nachfolgenden Ventilöffnung.

Weiter vorzugsweise kann die vorhergehende Ventilöffnung die zeitlich erste Ventilöffnung einer Gruppe von Ventilöffnungen bilden, zu der des Weiteren die nachfolgende Ventilöffnung sowie mindestens eine weitere, der vorhergehenden Ventilöffnung ebenfalls zeitlich nachfolgende Ventilöffnung gehört, deren Ist-Öffnungszeit (ebenfalls) zur Kompensation der Störeffekte verkürzt wird.

Weiter vorzugsweise kann jede Ist-Öffnungsdauer sämtlicher nachfolgenden Ventilöffnungen der Gruppe jeweils auf die Ist-Öffnungsdauer der vorhergehenden Öffnungsdauer verkürzt werden.

Weiter vorzugsweise kann die Verkürzung der Ist-Öffnungszeit der nachfolgenden Ventilöffnung nach Maßgabe eines oder mehrerer der folgenden Ventilbetriebsparameter erfolgen: der mittleren Frequenz der Ventilöffnungen, und/oder der Frequenz zwischen zwei aufeinanderfolgenden Ventilöffnungen, und/oder der an der Spule anliegenden Spannung und/oder des in der Spule fließenden Stroms, und/oder der Spannung oder des Stroms, die/der die zeitlich vorhergehende Ventilöffnung bewirkende Ansteuerspannungsimpuls und/oder ein sich im Magnetfeld der Spule bewegendes Ankerteil, insbesondere das Verschlussorgans des Ventils, in der Spule induziert, und/oder des durch den Stromfluss durch die Spule bewirkten magnetischen Flusses, und/oder der (magnetischen) Remanenz der magnetisierbaren Materialien des Ventils, insbesondere des Elektromagneten des Ventils, und/oder eines Maßes für die Eigenerwärmung des Ventils, insbesondere der Temperatur des Ventils und/oder des Klebstoffs.

Weiter vorzugsweise kann die Spule für die Ventilöffnungen in einer festen, sich nicht ändernden Frequenz mit den Ansteuerspannungsimpulsen beaufschlagt werden.

Weiter vorzugsweise kann, um die oder die jeweilige kürzere Ist-Öffnungsdauer der oder jeder nachfolgenden Ventilöffnung zu bewirken, die Spannung des diese bewirkenden Ansteuerspannungsimpulses mit einem Tastgrad kleiner 100 % versehen sein oder werden, wohingegen der die Ist-Öffnungsdauer der vorhergehenden Ventilöffnung bewirkende Ansteuerspannungsimpuls mit keinem Tastgrad oder einem Tastgrad von 100 % versehen ist oder wird.

Weiter vorzugsweise können die Ansteuerspannungsimpulse für alle Ventilöffnungen, mit denen die Spule beaufschlagt wird, jeweils auf dem gleichen, insbesondere jeweils mit einem Tastgrad zwischen 0 % und 100 % versehenen, vorzugsweise rechteckförmigen Spannungsverlauf basieren.

Weiter vorzugsweise können in einem elektronischen Speicher zu unterschiedlichen Werten eines oder mehrerer der Ventilbetriebsparameter oder einem von dem jeweiligen Ventilbetriebsparameter abhängigen Parameter unterschiedliche Tastgrade hinterlegt sein. Dabei kann ein Wert des jeweiligen Ventilbetriebsparameters oder des davon abhängigen Parameters im Auftragsnormalbetrieb oder in einem Messbetrieb des Ventils durch Messung und/oder rechnerisch ermittelt werden. Nach Maßgabe des Ermittlungsergebnisses kann dann der zu diesem passende Tastgrad aus dem Speicher ausgewählt und der oder jeder Ansteuerspannungsimpuls, der die bzw. eine jeweilige nachfolgende Ventilöffnung bewirkt, mit dem ausgewählten Tastgrad versehen werden.

Weiter vorzugsweise kann der Tastgrad für den oder jeden nachfolgenden Ansteuerspannungsimpuls nach Maßgabe des, jedes oder eines der Ventilbetriebsparameter gewählt werden, insbesondere nach Maßgabe der Spannung, die derjenige Ansteuerspannungsimpuls in der Spule induziert, der dem die nachfolgende Ventilöffnung bewirkenden Ansteuerspannungsimpuls zeitlich direkt vorhergeht und/oder nach Maßgabe der Spannung, die ein sich im Magnetfeld der Spule bewegendes Ankerteil, insbesondere das Ver-schlussorgan des Ventils, in der Spule induziert.

Weiter vorzugsweise können im Rahmen der Verkürzung der Ist-Öffnungsdauer der nachfolgenden Ventilöffnung, insbesondere durch Verwendung eines entsprechenden Ansteuerspannungsimpulses, zusätzlich zu den Störeffekten, die ohne Kompensation die Ist-Öffnungsdauer der jeweiligen Ventilöffnung verlängern würden, auch insbesondere auf der Eigenerwärmung des Ventils beruhende Viskositätsänderungen des Klebstoffs kompensiert werden, die ohne Kompensation bei unterstellter gleicher Ist-Öffnungsdauer von nacheinander erfolgenden Ventilöffnungen aufgrund geringer werdender Klebstoffviskosität zu größer werdenden Portionsmengen der abgegebenen Klebstoffportionen führen würden.

Weiter vorzugsweise kann bei den insbesondere in dem Speicher hinterlegten Tastgraden ein zuvor außerhalb des Auftragsnormalbetriebs des Ventils ermittelter, insbesondere fester Faktor berücksichtigt sein, über den die Viskositätsänderungen des Klebstoffs während des Auftragsnormalbetriebs kompensiert werden.

Weiter vorzugsweise kann, um die kürzere Ist-Öffnungsdauer der oder der jeweiligen nachfolgenden Ventilöffnung zu bewirken, für den diese bewirkenden Ansteuerspannungsimpuls eine feste, in einem elektronischen Speicher hinterlegte, gegenüber dem Ansteuerspannungsimpuls der vorhergehenden Ventilöffnung geringere Spannungsvorgabe gewählt werden.

Weiter vorzugsweise können in dem elektronischen Speicher unterschiedliche Spannungsvorgaben für den die oder die jeweilige nachfolgende Ventilöffnung bewirkenden Ansteuerspannungsimpuls hinterlegt sein, insbesondere in einer Tabelle oder in einer Formel, wobei für diesen Ansteuerspannungsimpuls eine der hinterlegten Spannungsvorgaben ausgewählt wird, insbesondere nach Maßgabe des, jedes oder eines der während des oder vor dem Auftragsnormalbetrieb des Ventils gemessen Ventilbetriebsparameters.

Weiter vorzugsweise kann die Spule während des Auftragsnormalbetriebs des Ventils, insbesondere vor jedem Ansteuerspannungsimpuls, gezielt mit einer magnetische Remanenzen abbauenden oder entgegenwirkenden Spannung beaufschlagt werden, insbesondere einer Wechselspannung.

Weiter vorzugsweise kann im Rahmen eines außerhalb des Auftragsnormalbetriebs des Ventils durchgeführten Messbetriebs, insbesondere während Spülzyklen, in denen das Ventil durch Spülen gereinigt wird, der, jeder oder einer der Ventilbetriebsparameter und/oder ein oder mehrere unveränderliche Ventilkennwerte, wie der Widerstand der Spule oder deren Induktivität, durch Messung und/oder rechnerisch ermittelt werden, insbesondere zur Ermittlung der Eigenerwärmung des Ventils und/oder des Verschleißes des Ventils.

Weiter vorzugsweise kann anhand des oder jedes während des Messbetriebs ermittelten Ventilbetriebsparameters und/oder des oder der Ventilkennwerte der Verschleiß des Ventils bestimmt und/oder überwacht werden.

Weitere Merkmale der vorliegenden Erfindung ergeben sich aus den beigefügten Patentansprüchen, der nachfolgenden Beschreibung bevorzugter Ausführungsbeispiele sowie aus den beigefügten Zeichnungen.

Darin zeigt:
- Fig. 1: einen Querschnitt durch eine in den wesentlichen Teilen dargestellte erfindungsgemäße Vorrichtung zum Auftragen von Klebstoffportionen auf Substrate, die mit dem erfindungsgemäßen Verfahren betrieben werden kann,
- Fig. 2: die Einzelheit II aus Fig. 1 in vergrößerter Darstellung,
- Fig. 3: drei Diagramme, die qualitativ Zusammenhänge zwischen Ansteuerspannungsimpulsen, daraus resultierenden Stromflüssen in der Spule des Elektromagneten sowie Öffnungsdauern und Frequenzen der resultierenden Ventilöffnungen darstellen.

Die gezeigte (Auftrags-)Vorrichtung 10 zum Auftragen von einzelnen Klebstoffportionen umfasst eine Ventilanordnung 11 mit einem (Klebstoff-)Verteiler 12, an dem ein oder mehrere einzelne Ventile 13 befestigt sind. Jedes Ventil bzw. Einzelventil 13 ist in an sich bekannter Weise an einen Klebstoffzufuhrkanal 14 des Verteilers 12 angeschlossen, über den dem jeweiligen Ventil 13 Klebstoff aus einer nicht gezeigten Klebstoffquelle zugeführt wird, beispielsweise mittels einer ebenfalls nicht gezeigten Förderpumpe.

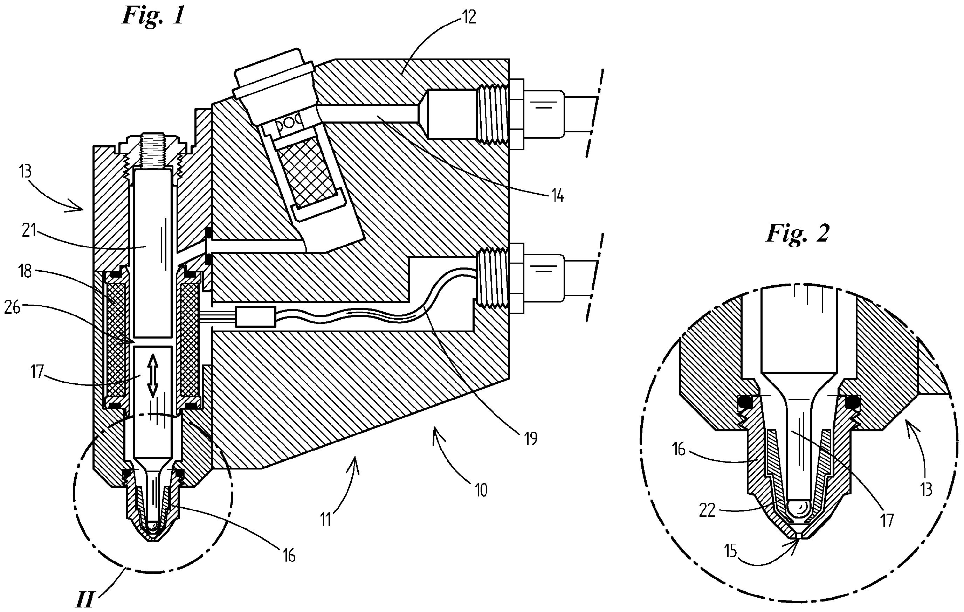

Das Ventil 13 gibt den ihm zugeführten Klebstoff zeitlich intermittierend, d. h. in einzelnen Portionen nacheinander ab, beispielsweise auf ein nicht gezeigtes Substrat, wie etwa einen Zuschnitt für eine Zigarettenpackung. Dies kann in Form einer Reihe aufeinander folgender, voneinander beabstandeter, insbesondere, aber nicht zwingend punktförmiger Klebstoffportionen erfolgen. Jede Klebstoffportion wird dabei aus einer Düsenöffnung 15 einer Düse 16 des Ventils 13 abgegeben. Zu diesem Zweck wird das bewegbare Verschlussorgan 17 aus der in Figur 1 gezeigten geschlossenen Stellung des Ventils 13 nach oben in eine geöffnete Stellung bewegt.

Die Düse 16 kann beispielsweise aus Metall bestehen, um eine gute Wärmeleitfähigkeit zwischen Düse 16 und Klebstoff zu gewährleisten. Denn es ist regelmäßig ein grundsätzliches Ziel, die Klebstofftemperatur innerhalb des Ventils 13 während des Normal- oder Standardbetriebs des Ventils 13 bzw. der Vorrichtung 10, während dessen die Klebstoffportionen auf das Substrat im Rahmen eines Produktionsprozesses aufgebracht werden, auf einem möglichst gleichen Niveau zu halten, um die Viskosität des Klebstoffs im gesamten Ventil 13 möglichst gleichmäßig zu halten. Dies gelingt besonders gut, indem Wärme durch geeignete Konstruktion des Ventils 13 und durch Wahl geeigneter Materialien innerhalb des Ventils 13 möglichst gleichmäßig übertragen werden kann.

Um eine möglichst hohe Verschleißfestigkeit bei zyklischer Belastung durch das Verschlussorgan 17 zu gewährleisten, ist in der Düse 16 innenseitig ein Inlay 22 aus hochfestem Material angeordnet, vgl. Figur 2.

Als hochfestes Material kann beispielsweise Ampcoloy oder ein anderes keramisches Material- bzw. Stoffgemisch zum Einsatz kommen. Das Inlay 22 ist dabei vorzugsweise in die Düse 16 eingeklebt, kann aber auch anderweitig form- bzw. kraftschlüssig mit dieser verbunden sein. Somit bildet das Inlay 22 innerhalb der Düse 16 einen verschleißfesten Ventilsitz für das Verschlussorgan 17.

Das gezeigte Ventil 13 ist elektromagnetisch betätigt, indem ein eine Spule 18 umfassender Elektromagnet von einer nicht gezeigten Steuerung der Vorrichtung 10 entsprechend geschaltet wird. Zu diesem Zweck sind durch den Verteiler 12 von der Steuerung Stromleitungen 19 zu dem Ventil 13 geführt.

Konkret wird im vorliegenden Fall die Spule 18 des Elektromagneten jeweils mit zeitlich voneinander beabstandeten Ansteuerspannungsimpulsen 20 beaufschlagt, die eine Magnetkraft auslösen, durch die das mindestens teilweise aus Metall bestehende, als Anker wirkende Verschlussorgan 17 gegen eine Rückstellkraft eines Rückstellorgans 26, die das Verschlussorgan in der in Fig. 1 gezeigten Schließstellung hält, (nach oben) in die Öffnungsstellung bewegt wird.

Das Rückstellorgan 26 umfasst zur Erzeugung der Rückstellkraft im vorliegenden Fall ein oder mehrere Paare von gleichnamigen, sich abstoßenden Dauermagneten, die an sich gegenüberliegenden Enden des Verschlussorgans 17 und eines Anschlagteils 21 angeordnet sind. Natürlich könnte das Rückstellorgan 26 auch eine Rückstellfeder oder dergleichen umfassen.

Es versteht sich insgesamt, dass auch diverse andere Arten von elektromagnetischen Ventilen bzw. Ventilen, die mithilfe von Elektromagneten geschaltet werden, für die erfindungsgemäße Auftragsvorrichtung 10 bzw. das nachfolgend näher beschriebene, erfindungsgemäße Auftragsverfahren eingesetzt werden können. So können unter anderem auch sogenannte Snuff-Back-Ventile eingesetzt werden, bei denen das Verschlussorgan 17 aus einer Schließstellung nach unten bewegt wird, um dies in eine Öffnungsstellung zu überführen. Auch denkbar ist die Verwendung von pneumatisch betätigten Ventilen, bei denen die Druckluftzufuhr elektromagnetisch geschaltet bzw. gesteuert wird.

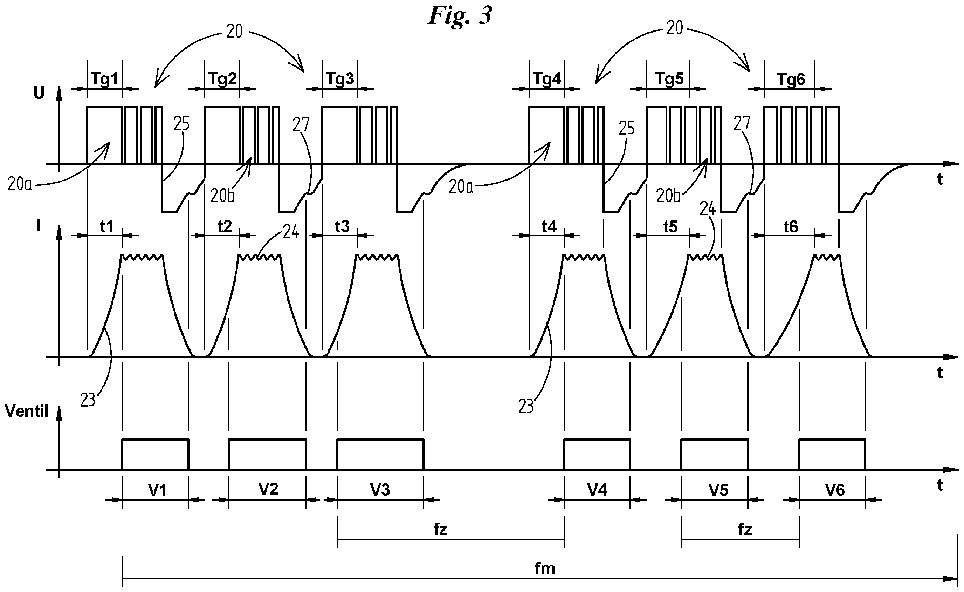

In der Figur 3 sind exemplarisch drei untereinander angeordnete Diagramme gezeigt, anhand derer das erfindungsgemäße Verfahren näher erläutert wird.

In dem oberen Diagramm ist der zeitliche Verlauf der an der Spule 18 des Ventils 13 anfallenden Spannung dargestellt. Diese setzt sich zusammen aus Ansteuerspannungsimpulsen 20, mit denen die Spule 18 von der Steuerung der Vorrichtung 10 im Betrieb des Ventils 13 beaufschlagt wird, und aus in der Spule 18 durch elektromagnetische Effekte induzierten Spannungen.

In dem mittleren Diagramm ist der zeitliche Verlauf des sich aufgrund der anfallenden Spannung, insbesondere aufgrund der Ansteuerspannungsimpulse 20, in der Spule 18 einstellenden elektrischen Stroms gezeigt.

In dem unteren Diagramm schließlich sind die sich jeweils einstellenden Ist-Öffnungsdauern V1, V2 ...V6 des Ventils 13 dargestellt.

Dabei zeigt die linke Hälfte der Fig. 3 die Kurvenverläufe bzw. Daten, die sich ohne die erfindungsgemäß vorgesehene Kompensation von Störeffekten ergeben (Stand der Technik). Die rechte Hälfte der Fig. 3 dagegen zeigt die Kurvenverläufe/Daten mit Kompensation der Störeffekte.

Wie in der linken Hälfte der Fig. 3 zu sehen ist, wird die Spule 18 nacheinander, vorliegend mit jeweils identischem zeitlichen Abstand zwischen ihnen, mit drei Ansteuerspannungsimpulsen 20 beaufschlagt.

Jeder Ansteuerspannungsimpuls 20 weist dabei einen (vorliegend rechteckförmigen) Bestandteil 20 a auf, der für eine Dauer t1 ... t3 einen Öffnungsstrom 23 (ansteigende Flanke in der Stromkurve) in der Spule 18 verursacht und der eine Magnetkraft auslöst, die in an sich bekannter Weise zu der jeweiligen Öffnungsbewegung des Verschlussorgans 17 führt.

Jeder Ansteuerspannungsimpuls 20 weist zudem einen identischen, auf den Bestandteil 20 a folgenden Bestandteil 20 b auf, der einen Haltestrom 24 (horizontaler Stromabschnitt) bewirkt, sobald das Verschlussorgan 17 am Ende seiner Öffnungsbewegung an das Anschlagteil 21 angeschlagen ist. Der jeweilige Bestandteil 20 b des jeweiligen Ansteuerspannungsimpulses 20 weist zu diesem Zweck einen geringeren mittleren Spannungswert auf als die jeweiligen Bestandteile 20 a (vorliegend, indem die Spannung mit einem entsprechenden Tastgrad kleiner 100 % versehen wurde).

Um das Ventil zu schließen, endet dann der jeweilige Ansteuerspannungsimpuls 20 bzw. es wird die Spannung desselben auf 0 geführt, sodass die Rückstellkraft des Rückstellorgans des Ventils 13 die durch den Haltestrom erzeugte (Magnet-)Haltekraft überwiegt und das Verschlussorgan 17 in die Schließstellung des Ventils 13 rücküberführt wird.

Diese Rückbewegung des Verschlussorgans 17 löst in der Spule 18 jeweils eine Induktionsspannung 25 aus.

Das Aufsetzen des Verschlussorgans 17 schließlich am Ende der Rückbewegung auf den Ventilsitz, vergleiche die Schließstellung in Figur 1, ist als diskreter Spannungsimpuls 27 sichtbar.

Die jeweiligen Ist-Öffnungsdauern (V1, V2, V3) des Ventils 13, also die effektive Zeit, in der das Ventil 13 geöffnet ist und aus diesem Klebstoff austreten kann, das Verschlussorgan 17, also die Düsenöffnung 15 freigibt, ergibt sich aus der Zeit zwischen dem Abheben des Verschlussorgans 17 und entsprechender Freigabe der Düsenöffnung 15 nach Einsetzen des Stroms durch die Spule 18 und dem späteren Aufschlagen des Verschlussorgans 17 auf den Ventilsitz unter erneutem Verschließen der Düsenöffnung 15.

Wie in der linken Hälfte der Figur 3 des Weiteren gut zu erkennen ist, verlängert sich diese Ist-Öffnungszeit des Ventils 13 von Ansteuerspannungsimpuls 20 zu Ansteuerspannungsimpuls 20 bzw. mit fortschreitendem Betrieb des Klebstoffventils 13 (V1 < V2 < V3).

Dies führt im Ergebnis dazu, dass die Klebstoffportionen, die das Ventil 13 abgibt, entsprechend größer werden. Dies ist in der Regel nicht gewollt, insbesondere dann nicht, wenn Klebstoffportionen gleicher Menge aufgebracht werden sollen, wie dies je nach Anwendungsfall häufig gefordert wird.

Hintergrund der sich jeweils verlängernden Ist-Öffnungsdauer sind unter anderem Störeffekte durch sich ausbildende Remanenzen bzw. Ummagnetisierungen in dem Ventil 13, insbesondere dem Elektromagneten des Ventils 13. Diese Remanenzen führen dazu, dass zu der Magnetkraft, die jeweils der Spulenstrom auslöst, eine zusätzliche, durch die Ummagnetisierungen bewirkte Magnetkraft hinzutritt.

Aber auch durch Änderungen der Viskosität des Klebstoffs aufgrund der betriebsbedingten, fortschreitenden Erwärmung des Ventils 13 (Eigenerwärmung) führen zu Störeffekten, die die Ist-Öffnungsdauern verlängern. Denn das Verschlussorgan 17 benötigt aufgrund der bei sich erwärmendem Klebstoff geringeren Viskosität nur noch eine geringere Zeit, um jeweils durch den Klebstoff bewegt zu werden (der Widerstand des Klebstoffes sinkt).

Während zum Beispiel bei dem zeitlich ersten Ansteuerspannungsimpuls 20 entsprechend das Ventil 13 erst tatsächlich, so wie es vorgesehen ist, nach einer Zeit t1 am Ende des Stromanstiegs nach dem Beginn des Ansteuerspannungsimpulses 20 öffnet bzw. das Verschlussorgan 17 von dem Ventilsitz abhebt, was wiederum mit dem Ende des Öffnungsstromabschnitts 23 bzw. dem Ende der ansteigenden Flanke des Stromverlaufs korrespondiert, öffnet das Ventil 13 bei dem nachfolgenden zweiten Ansteuerspannungsimpuls 20 bereits vor dem Ende des Öffnungsstroms t2 zu einem früheren Zeitpunkt und bei dem nachfolgenden, weiteren bzw. dritten Ansteuerspannungsimpuls 20 zu einem nochmals früheren Zeitpunkt. Denn es ist, wie bereits erwähnt, für das Abheben des Verschlussorgans 17 von dem Ventilsitz bei den nachfolgenden Ansteuerspannungsimpulsen 20 nur noch ein geringerer Strom erforderlich, der entsprechende Schwellwert, ab dem das Verschlussorgan 17 abhebt, sinkt.

Erfindungsgemäß ist nun vorgesehen, die vorgenannten Störeffekte zu kompensieren, indem die Ist-Öffnungsdauern der durch nachfolgende Ansteuerspannungsimpulse 20 einer Gruppe von Ansteuerspannungsimpulsen 20 bewirkten Ventilöffnungen verkürzt werden, und zwar insbesondere auf die Länge derjenigen Ist-Öffnungsdauer, die von einem vorhergehenden Ansteuerspannungsimpuls 20 bewirkt wird, beispielsweise von dem zeitlich ersten Ansteuerspannungsimpuls 20 der Gruppe.

Zu diesem Zweck wird die Spule 18 jeweils mit einem Ansteuerspannungsimpuls 20 beaufschlagt, der eine Ist-Öffnungsdauer nach sich zieht, die derjenigen des durch ein vorhergehenden, insbesondere den ersten Ansteuerspannungsimpuls 20 bewirkten Ist-Öffnungsdauer entspricht.

Die entsprechenden Zusammenhänge sind in der rechten Hälfte der Figur 3 dargestellt.

Wie dort erkennbar ist, wird die mittlere Spannung der zuvor identischen (vergleiche linke Hälfte der Figur 3) Bestandteile 20 a des fünften und sechsten Ansteuerspannungsimpulses 20 reduziert durch Beaufschlagung der (Ausgangs-)Spannung mit entsprechenden Tastgraden Tg5 und Tg6, die kleiner 100 % gewählt sind (die Tastgrade Tg1 - Tg3 in der linken Hälfte der Fig. 3 sowie Tg4 in der rechten Hälfte der Fig. 3 sind jeweils identisch und betragen 100 %, was einem unveränderten Ausgangsspannungssignal entspricht).

Hierdurch wird jeweils der durch die nachfolgenden fünften und sechsten Ansteuerspannungsimpulse 20 ausgelöste Stromanstieg des jeweiligen Öffnungsstroms 23 (ansteigende Flanke) im Vergleich zu dem durch den vorhergehenden, vierten Ansteuerspannungsimpuls 20 ausgelösten Stromanstieg des Öffnungsstroms 23 verlangsamt, was im Ergebnis zu einem späteren Abheben des Verschlussorgans 17 vom Ventilsitz bzw. zu einer späteren Öffnung des Ventils 13 führt als ohne eine solche Kompensation.

Wie erkennbar ist, können die Ist-Öffnungsdauern und damit die jeweils abgegebenen Klebstoffportionen auf diese Weise jeweils trotz der Störeffekte auf identische Werte bzw. Mengen gebracht werden.

Alternativ ist natürlich auch denkbar, anstelle der Verwendung von Tastgraden, mit denen zuvor identische Ansteuerspannungsimpulse zur Verlangsamung des Stromanstiegs beaufschlagt werden, für oder als Ansteuerspannungsimpulse geeignete Spannungsvorgaben bzw. Spannungsverläufe mit unterschiedlichen Mittelwerten (im Mittel entsprechend kleiner werdend) in einem Speicher zu hinterlegen, die dann von der Steuerung ausgewählt werden.

Erfindungsgemäß erfolgt die vorgenannte Verkürzung der nachfolgenden Ventilöffnungen jeweils nach Maßgabe eines oder mehrerer Ventilbetriebsparameter des Ventils 13.

Diese Ventilbetriebsparameter können vorzugsweise aktuelle Ventilbetriebsparameter sein, die während des Normalbetriebs der Vorrichtung 10 bzw. des Ventils 13 durch Messung und/oder rechnerisch ermittelt werden.

Ein solcher Ventilbetriebsparameter kann im vorliegenden Fall beispielsweise die an der Spule 18 anliegende Spannung sein, die entsprechend gemessen wird, und die sich zusammensetzt aus der Spannung der vorgegebenen Ansteuerspannungsimpulse 20 sowie ggf. aus der durch die Ansteuerspannungsimpulse 20 oder die Rückbewegung des Verschlussorgans 17 induzierten Spannung.

Auch der sich in der Spule 18 einstellende Strom kann als Ventilbetriebsparameter herangezogen werden.

Genauso wie die zeitlichen Abstände zwischen zwei Ventilöffnungen bzw. die (sich ändernde) Frequenz fz der Ventilöffnungen oder die mittlere Frequenz fm über mehrere Ventilöffnungen.

Dabei ist auch denkbar, auf Basis der aktuell gemessenen Ventilparameter, wie etwa der an der Spule 18 anfallenden Spannung, dem durch diese fließenden Strom und/oder der in dieser induzierten Spannung bzw. dem in dieser induzierten Strom, weitere Ventilbetriebsparameter rechnerisch zu ermitteln und dann nach Maßgabe der rechnerisch ermittelten Ventilbetriebsparameter die Ist-Öffnungszeiten zu steuern bzw. die Ansteuerspannungsimpulse für die jeweiligen Ventilöffnungen zu wählen.

Aus den durch Messung bestimmten Ventilbetriebsparametern könnte die Steuerung der Vorrichtung 10 dann beispielsweise unter anderem als Ventilbetriebsparameter die aktuelle Remanenz der Spule 18 ableiten bzw. rechnerisch ermitteln. Sind dann zudem der Spulenwiderstand und der Widerstand der Stromleitungen bekannt, an die die Spule 18 angeschlossen ist, kann auch die aktuelle Erwärmung des Ventils 13 und/oder des Klebstoffs abgeleitet werden bzw. ein Maß dafür, insbesondere die Temperatur.

Abhängig von der ermittelten aktuellen Remanenz und/oder Eigenerwärmung des Ventils kann dann die Ist-Öffnungsdauer durch geeignete Wahl des Tastgrads des nächsten Ansteuerspannungsimpulses 20 zielgenau in der beschrieben bzw. gewünschten Weise eingestellt werden.

Sollte die Ermittlung ergeben, dass keine Remanenz und keine Erwärmung vorliegen, beispielsweise bei Inbetriebnahme der Vorrichtung 10 bzw. des Ventils 13 nach einer Stillstandsphase, könnte dann zunächst ein Ansteuerspannungsimpuls 20 ohne Beaufschlagung mit einem Tastgrad bzw. mit Beaufschlagung mit einem Tastgrad von 100 % verwendet werden, vgl. beispielsweise Tg4 in Fig. 3.

Sollte die Ermittlung dagegen eine Remanenz und/oder Erwärmung des Ventils 13 ergeben, würde der jeweils der Ermittlung nachfolgende Ansteuerspannungsimpuls 20 dann dynamisch durch Wahl des geeigneten Tastgrads angepasst werden, sodass sich jeweils die erwünschte Ist-Öffnungsdauer einstellt, vgl. Tg5 und Tg6.

Welcher Tastgrad bei welchem Remanenz- bzw. Erwärmungswert dann jeweils im Normalbetrieb konkret von der Steuerung verwendet wird, kann beispielsweise zuvor empirisch ermittelt und festgelegt worden sein und entweder formelmäßig oder in Tabellenform in einem der Steuerung zugeordneten Speicher hinterlegt sein, sodass die Steuerung dann nach Maßgabe des aktuell ermittelten Remanenz- bzw. Erwärmungswerts den geeigneten Tastgrad errechnet oder aber aus der Tabelle auswählt.

Alternativ oder zusätzlich ist natürlich auch denkbar, wie oben bereits angedeutet, auf die rechnerische Ermittlung solcher von den gemessenen Ventilbetriebsparametern abgeleiteten Ventilbetriebsparameter ganz oder teilweise zu verzichten und die Ist-Öffnungsdauern auch oder zusätzlich nach Maßgabe der gemessenen Ventilbetriebsparameter zu steuern bzw. die Ansteuerspannungsimpulse 20 entsprechend zu wählen.

Alternativ oder zusätzlich wäre im Übrigen auch denkbar, außerhalb des (Auftrags-)Normalbetriebs, beispielsweise in einem Messbetrieb (etwa während ohnehin ablaufender Reinigungsphasen bzw. während eines Spülbetriebs), bestimmte Ventilbetriebsparameter vorab zu ermitteln (durch Messung und/oder rechnerisch) und in einem/dem der Steuerung zugeordneten elektronischen Speicher zu hinterlegen.

Dabei könnten dann beispielsweise, insofern möglich, auch Betriebszeitabhängigkeiten der Ventilparameter ermittelt und in dem Speicher mit dem jeweiligen Ventilbetriebsparameter in Form einer Tabelle oder in einer Formel verknüpft werden. Im späteren Normalbetrieb könnte die Steuerung dann beispielsweise nach Maßgabe der aktuellen Betriebszeit, die dann bestimmt bzw. gemessen wird, aus der Tabelle den zugeordneten Ventilparameter ermitteln und nach Maßgabe dessen dann den jeweiligen Tastgrad für den jeweiligen nachfolgenden Ansteuerspannungsimpuls 20 ermitteln, beispielsweise unter Rückgriff auf eine Tabelle oder eine Formel, in der eine Zuordnung zwischen Ventilbetriebsparameter und Tastgrad hinterlegt ist.

Denkbar ist alternativ natürlich auch, unmittelbar einen Zusammenhang bzw. eine Zuordnung zwischen Ventilbetriebszeit und Tastgrad abzuleiten bzw. zu ermitteln und diesen in einer Formel und einer Tabelle zu hinterlegen, sodass das Auswahlkriterium für den jeweils richtigen Tastgrad dann mit anderen Worten im einfachsten Fall nur die aktuelle Betriebszeit wäre.

In einem solchen, außerhalb des Auftragsnormalbetriebs des Ventils durchgeführten Messbetriebs, insbesondere während eines Spülbetriebs, könnten im Übrigen auch ein oder mehrere unveränderliche Ventilkennwerte, wie der Widerstand der Spule 18 oder deren Induktivität, durch Messung und/oder rechnerisch ermittelt werden.

Neben der erfindungsgemäßen, insbesondere dynamischen Verkürzung der Ist-Öffnungsdauer ist zusätzlich denkbar, anhand eines oder mehrerer gemessener Ventilparameter eine Überwachung zu etablieren, um den Verschleiß des Ventils 13 zu erfassen. Dies kann insbesondere auf Basis bzw. durch Auswertung des Spannungsimpulses 27 erfolgen, der durch das Aufschlagen des Verschlussorgans 17 auf den Ventilsitz erzeugt wird und der bei Verschleiß charakteristischen Änderungen unterliegt.

Um den elektromagnetischen Störeffekten entgegenzuwirken, ist im Übrigen alternativ oder zusätzlich noch denkbar, die Spule 18 während des Auftragsnormalbetriebs des Ventils 13, insbesondere vor jedem Ansteuerspannungsimpuls 20, gezielt mit einer magnetische Remanenzen abbauenden oder entgegenwirkenden Spannung zu beaufschlagen, insbesondere mit einer Wechselspannung.

### Bezugszeichenliste:

- 10: Auftragsvorrichtung
- 11: Ventilanordnung
- 12: Verteiler
- 13: Ventil
- 14: Klebstoffzufuhrkanal
- 15: Düsenöffnung
- 16: Düse
- 17: Verschlussorgan
- 18: Spule
- 19: Stromleitungen
- 20: Ansteuerspannungsimpulse
- 20 a: Bestandteil Ansteuerspannungsimpuls
- 20 b: Bestandteil Ansteuerspannungsimpuls
- 21: Anschlagteil
- 22: Inlay
- 23: Öffnungsstrom
- 24: Haltestrom
- 25: Induktionsspannung
- 26: Rückstellorgan
- 27: Spannungsimpuls (Aufsetzen)

## Patentansprüche

1. Verfahren zum Auftragen von einzelnen Klebstoffportionen auf ein Substrat, bei dem die Klebstoffportionen mit einem Ventil (13) nacheinander auf das Substrat aufgebracht werden, wobei eine Spule (18) eines Elektromagneten für jede der aufeinanderfolgenden Abgaben von Klebstoffportionen des Ventils (13) jeweils mit einem Ansteuerspannungsimpuls (20) beaufschlagt wird, der eine Ventilöffnung des Ventils (13) für eine Ist-Öffnungsdauer bewirkt, während der aus dem Ventil (13) zur Abgabe der jeweiligen Klebstoffportion Klebstoff fließen kann, insbesondere durch Bewegung eines Verschlussorgans (17) des Ventils (13) aus einer Schließstellung in eine Öffnungsstellung, **dadurch gekennzeichnet, dass** die Ist-Öffnungsdauer mindestens einer der Ventilöffnungen, die einer zeitlich vorherhergehenden Ventilöffnung nachfolgt, zur Kompensation von insbesondere elektromagnetischen, die Ist-Öffnungsdauer der nachfolgenden Ventilöffnung verlängernden Störeffekten nach Maßgabe eines oder mehrerer Ventilbetriebsparameter vorzugsweise dynamisch verkürzt wird im Vergleich zu einer Ist-Öffnungsdauer der nachfolgenden Ventilöffnung ohne eine solche Kompensation, und zwar durch Beaufschlagen der Spule (18) mit einem die verkürzte Ist-Öffnungsdauer bewirkenden Ansteuerspannungsimpuls (20).

2. Verfahren gemäß Anspruch 1, **dadurch gekennzeichnet, dass** der, jeder oder mindestens einer der Ventilbetriebsparameter ein aktuell ermittelter Ventilbetriebsparameter ist, der während des Auftragsnormalbetriebs des Ventils (13) insbesondere kontinuierlich oder zu mehreren diskreten Zeitpunkten durch Messung und/oder rechnerisch ermittelt wird, und dass abhängig von dem Ermittlungsergebnis die Ist-Öffnungszeit insbesondere dynamisch unterschiedlich stark verkürzt wird,
und/oder dass der, jeder oder mindestens einer der Ventilbetriebsparameter ein vorab ermittelter Ventilbetriebsparameter ist, der vor dem Auftragsnormalbetrieb des Ventils (13) durch Messung und/oder rechnerisch ermittelt und insbesondere in einem elektronischen Speicher hinterlegt wird, insbesondere unter Zuordnung zu einem anderen vorab ermittelten Ventilbetriebsparameter, insbesondere der Betriebszeit, und dass im Auftragsnormalbetrieb auf diesen vorab ermittelten Betriebsparameter und/oder auf den zugeordneten Ventilbetriebsparameter zurückgegriffen wird, vorzugsweise derart, dass die Verkürzung der Ist-Öffnungsdauer während des Auftragsnormalbetriebs des Ventils (13) nach Maßgabe dieses vorab ermittelten Ventilbetriebsparameters oder nach Maßgabe des zugeordneten anderen Betriebsparameters erfolgt.

3. Verfahren gemäß einem oder mehreren der vorhergehenden Ansprüche, **dadurch gekennzeichnet, dass** die Ist-Öffnungsdauer der nachfolgenden Ventilöffnung verkürzt wird auf die Ist-Öffnungsdauer der vorhergehenden Ventilöffnung, insbesondere zur Erzeugung gleicher Klebstoffportionsmengen bei den Klebstoffportionsabgaben der vorhergehenden und der nachfolgenden Ventilöffnung,
und/oder dass die vorhergehende Ventilöffnung die zeitlich erste Ventilöffnung einer Gruppe von Ventilöffnungen bildet, zu der des Weiteren die nachfolgende Ventilöffnung sowie mindestens eine weitere, der vorhergehenden Ventilöffnung ebenfalls zeitlich nachfolgende Ventilöffnung gehört, deren Ist-Öffnungszeit (ebenfalls) zur Kompensation der Störeffekte verkürzt wird.

4. Verfahren gemäß Anspruch 4, **dadurch gekennzeichnet, dass** jede Ist-Öffnungsdauer sämtlicher nachfolgenden Ventilöffnungen der Gruppe jeweils auf die Ist-Öffnungsdauer der vorhergehenden Öffnungsdauer verkürzt wird.

5. Verfahren gemäß einem oder mehreren der vorhergehenden Ansprüche, **dadurch gekennzeichnet, dass** die Verkürzung der Ist-Öffnungszeit der nachfolgenden Ventilöffnung nach Maßgabe eines oder mehrerer der folgenden Ventilbetriebsparameter erfolgt: Der mittleren Frequenz der Ventilöffnungen, und/oder der Frequenz zwischen zwei aufeinanderfolgenden Ventilöffnungen, und/oder der an der Spule (18) anliegenden Spannung und/oder des in der Spule (18) fließenden Stroms, und/oder der Spannung oder des Stroms, die/der die zeitlich vorhergehende Ventilöffnung bewirkende Ansteuerspannungsimpuls (20) und/oder ein sich im Magnetfeld der Spule (18) bewegendes Ankerteil, insbesondere das Verschlussorgan (17) des Ventils (13), in der Spule (18) induziert, und/oder des durch den Stromfluss durch die Spule (18) bewirkten magnetischen Flusses, und/oder der (magnetischen) Remanenz der magnetisierbaren Materialien des Ventils (13), insbesondere des Elektromagneten des Ventils (13), und/oder eines Maßes für die Eigenerwärmung des Ventils (13), insbesondere der Temperatur des Ventils (13) und/oder des Klebstoffs.

6. Verfahren gemäß einem oder mehreren der vorhergehenden Ansprüche, **dadurch gekennzeichnet, dass** die Spule (18) für die Ventilöffnungen in einer festen, sich nicht ändernden Frequenz mit den Ansteuerspannungsimpulsen (20) beaufschlagt wird, und/oder dass, um die oder die jeweilige kürzere Ist-Öffnungsdauer der oder jeder nachfolgenden Ventilöffnung zu bewirken, die Spannung des diese bewirkenden Ansteuerspannungsimpulses mit einem Tastgrad kleiner 100 % versehen ist oder wird, wohingegen der die Ist-Öffnungsdauer der vorhergehenden Ventilöffnung bewirkende Ansteuerspannungsimpuls (20) mit keinem Tastgrad oder einem Tastgrad von 100 % versehen ist oder wird.

7. Verfahren gemäß einem oder mehreren der vorhergehenden Ansprüche, **dadurch gekennzeichnet, dass** die Ansteuerspannungsimpulse (20) für alle Ventilöffnungen, mit denen die Spule (18) beaufschlagt wird, jeweils auf dem gleichen, insbesondere jeweils mit einem Tastgrad zwischen 0 % und 100 % versehenen, vorzugsweise rechteckförmigen Spannungsverlauf basieren,
und/oder dass in einem elektronischen Speicher zu unterschiedlichen Werten eines oder mehrerer der Ventilbetriebsparameter oder einem von dem jeweiligen Ventilbetriebsparameter abhängigen Parameter unterschiedliche Tastgrade hinterlegt sind, dass ein Wert des jeweiligen Ventilbetriebsparameters oder des davon abhängigen Parameters im Auftragsnormalbetrieb oder in einem Messbetrieb des Ventils (13) durch Messung und/oder rechnerisch ermittelt wird, dass nach Maßgabe des Ermittlungsergebnisses der zu diesem passende Tastgrad aus dem Speicher ausgewählt wird, und dass der oder jeder Ansteuerspannungsimpuls (20), der die bzw. eine jeweilige nachfolgende Ventilöffnung bewirkt, mit dem ausgewählten Tastgrad versehen wird.

8. Verfahren gemäß Anspruch 6 oder 7, **dadurch gekennzeichnet, dass** der Tastgrad für den oder jeden nachfolgenden Ansteuerspannungsimpuls (20) nach Maßgabe des, jedes oder eines der Ventilbetriebsparameter gewählt wird, insbesondere nach Maßgabe der Spannung, die derjenige Ansteuerspannungsimpuls (20) in der Spule (18) induziert, der dem die nachfolgende Ventilöffnung bewirkenden Ansteuerspannungsimpuls (20) zeitlich direkt vorhergeht und/oder nach Maßgabe der Spannung, die ein sich im Magnetfeld der Spule (18) bewegendes Ankerteil, insbesondere das Verschlussorgan (17) des Ventils (13), in der Spule (18) induziert.

9. Verfahren gemäß einem oder mehreren der vorhergehenden Ansprüche, **dadurch gekennzeichnet, dass** im Rahmen der Verkürzung der Ist-Öffnungsdauer der nachfolgenden Ventilöffnung, insbesondere durch Verwendung eines entsprechenden Ansteuerspannungsimpulses, zusätzlich zu den Störeffekten, die ohne Kompensation die Ist-Öffnungsdauer der jeweiligen Ventilöffnung verlängern würden, auch insbesondere auf der Eigenerwärmung des Ventils (13) beruhende Viskositätsänderungen des Klebstoffs kompensiert werden, die ohne Kompensation bei unterstellter gleicher Ist-Öffnungsdauer von nacheinander erfolgenden Ventilöffnungen aufgrund geringer werdender Klebstoffviskosität zu größer werdenden Portionsmengen der abgegebenen Klebstoffportionen führen würden,
und/oder dass, um die kürzere Ist-Öffnungsdauer der oder der jeweiligen nachfolgenden Ventilöffnung zu bewirken, für den diese bewirkenden Ansteuerspannungsimpuls (20) eine feste, in einem elektronischen Speicher hinterlegte, gegenüber dem Ansteuerspannungsimpuls (20) der vorhergehenden Ventilöffnung geringere Spannungsvorgabe gewählt wird.

10. Verfahren gemäß einem oder mehreren der vorhergehenden Ansprüche 6 - 9, **dadurch gekennzeichnet, dass** in den insbesondere in dem Speicher hinterlegten Tastgraden ein zuvor außerhalb des Auftragsnormalbetriebs des Ventils (13) ermittelter, insbesondere fester Faktor berücksichtigt ist, über den die Viskositätsänderungen des

11. Verfahren gemäß Anspruch 10, **dadurch gekennzeichnet, dass** in dem elektronischen Speicher unterschiedliche Spannungsvorgaben für den die oder die jeweilige nachfolgende Ventilöffnung bewirkenden Ansteuerspannungsimpuls (20) hinterlegt sind, insbesondere in einer Tabelle oder in einer Formel, und dass für diesen Ansteuerspannungsimpuls (20) eine der hinterlegten Spannungsvorgaben ausgewählt wird, insbesondere nach Maßgabe des, jedes oder eines der während des oder vor dem Auftragsnormalbetrieb des Ventils (13) gemessen Ventilbetriebsparameters.

12. Verfahren gemäß einem oder mehreren der vorhergehenden Ansprüche, **dadurch gekennzeichnet, dass** die Spule (18) während des Auftragsnormalbetriebs des Ventils (13), insbesondere vor jedem Ansteuerspannungsimpuls (20), gezielt mit einer magnetische Remanenzen abbauenden oder entgegenwirkenden Spannung beaufschlagt wird, insbesondere einer Wechselspannung.

13. Verfahren gemäß einem oder mehreren der vorhergehenden Ansprüche, **dadurch gekennzeichnet, dass** im Rahmen eines außerhalb des Auftragsnormalbetriebs des Ventils (13) durchgeführten Messbetriebs, insbesondere während Spülzyklen, in denen das Ventil (13) durch Spülen gereinigt wird, der, jeder oder einer der Ventilbetriebsparameter und/oder ein oder mehrere unveränderliche Ventilkennwerte, wie der Widerstand der Spule (18) oder deren Induktivität, durch Messung und/oder rechnerisch ermittelt werden, insbesondere zur Ermittlung der Eigenerwärmung des Ventils (13) und/oder des Verschleißes des Ventils (13), wobei insbesondere der Verschleiß des Ventils (13) bestimmt und/oder überwacht wird anhand des oder jedes während des Messbetriebs ermittelten Ventilbetriebsparameters und/oder des oder der Ventilkennwerte.

14. Vorrichtung zum Auftragen von einzelnen Klebstoffportionen auf ein Substrat, insbesondere zur Durchführung des Verfahrens gemäß einem oder mehreren der vorhergehenden Ansprüche, mit einem Ventil, mit dem nacheinander Klebstoffportionen auf das Substrat aufbringbar sind, insbesondere einem Ventil (13), das ein aus einer Schließstellung in eine Öffnungsstellung bewegbares Verschlussorgan (17) aufweist, und mit einem eine Spule (18) umfassenden Elektromagneten, wobei die Spule (18) für jede der aufeinanderfolgenden Abgaben von Klebstoffportionen des Ventils (13) jeweils mit einem von einer Steuereinheit der Vorrichtung erzeugten Ansteuerspannungsimpuls (20) beaufschlagbar ist, der eine Ventilöffnung des Ventils (13) für eine Ist-Öffnungsdauer bewirkt, während der aus dem Ventil (13) zur Abgabe der jeweiligen Klebstoffportion Klebstoff fließen kann, insbesondere durch Bewegung des Verschlussorgans (17) des Ventils (13) aus einer Schließstellung in eine Öffnungsstellung, **dadurch gekennzeichnet, dass** die Steuereinheit derart ausgebildet ist, dass die Ist-Öffnungsdauer mindestens einer der Ventilöffnungen, die einer zeitlich vorherhergehenden Ventilöffnung nachfolgt, zur Kompensation von insbesondere elektromagnetischen, die Ist-Öffnungsdauer der nachfolgenden Ventilöffnung verlängernden Störeffekten nach Maßgabe eines oder mehrerer Ventilbetriebsparameter vorzugsweise dynamisch verkürzt wird im Vergleich zu einer Ist-Öffnungsdauer der nachfolgenden Ventilöffnung ohne eine solche Kompensation, und zwar durch Beaufschlagen der Spule (18) mit einem die verkürzte Ist-Öffnungsdauer bewirkenden Ansteuerspannungsimpuls (20).

15. Vorrichtung gemäß Anspruch 14, **gekennzeichnet durch** eine oder mehrere Merkmale der Ansprüche 1 - 13.
